(19) Europäisches Patentamt
European Patent Office
Office européen des brevets

(11) EP 0 851 000 A2

(12) EUROPEAN PATENT APPLICATION

(43) Date of publication:
01.07.1998 Bulletin 1998/27

(51) Int Cl.[6]: C08L 83/04, C09D 183/04

(21) Application number: 97310264.3

(22) Date of filing: 18.12.1997

(84) Designated Contracting States:
AT BE CH DE DK ES FI FR GB GR IE IT LI LU MC NL PT SE
Designated Extension States:
AL LT LV MK RO SI

(30) Priority: 24.12.1996 GB 9626889

(71) Applicant: DOW CORNING LIMITED
South Glamorgan CF63 2YL Wales (GB)

(72) Inventors:
- Francis, John G.
Glyn Neath, SA11 5UG, Wales (GB)
- Owens, Michael Sean
Midland, Michigan 48642 (US)
- Parbhoo, Bhukandas
Barry, Wales, CF62 7XL (GB)
- Rich, David A.
Barry, Wales CF62 9AT (GB)

(74) Representative:
Vandamme, Luc Johan Roger et al
Dow Corning Limited,
Cardiff Road
Barry, South Glamorgan CF63 2YL, Wales (GB)

# (54) Curable adhesive organosilicon compositions

(57) A curable organosilicon composition comprising an alkenyl functional organopolysiloxane having at least two silicon-bonded groups with aliphatic unsaturation, a precious metal based hydrosilation catalyst and a hydrosiloxane crosslinker having at least three silicon-bonded hydrogen atoms per molecule, which has at least one trivalent siloxane unit per molecule, at most 40% of all monovalent siloxane units, at least 40% of divalent siloxane units, at least 50% of all siloxane units of the crosslinker with a silicon-bonded hydrogen, and of the total number of siloxane units present in the total amount of hydrosiloxane crosslinkers in the composition at least 0.75% trivalent siloxane units. These compositions provide improved anchorage to a range of substrates.

EP 0 851 000 A2

## Description

The invention relates to curable organosilicon compositions, and in particular to siloxane based compositions which cure via addition reactions and which show improved adhesion to a variety of substrates.

Organosilicon compositions which are curable via addition reactions are well known and have been described in a number of publications. Suitable compositions usually include siloxane polymers having alkenyl functional substituents, organohydrogen siloxane materials and a catalyst suitable to catalyse the addition reaction between silicon-hydrogen groups and alkenyl groups, e.g. a group VIII metal based catalyst. These compositions are used in a variety of applications, many of which require good adhesion to a substrate. Of particular interest here is the adhesion of a siloxane coating to plastic or fibrous substrates, e.g. paper, to impart release properties to the substrate, for example as release liners for self-adhesive labels.

Endeavours to improve adhesion of addition curable organosilicon compositions have lead to a number of suggestions some of which have been published in a number of patent applications. These suggestions include the use of adhesion promoters or primers, as exemplified in US patents 4,087,585, 4,721,764, 4,786,701 and 4,912,188. These suggestions include the use of functional organosilicon compound, e.g. epoxy-functional silanes and siloxanes, organopolysiloxanes having silicon-bonded hydrogen and at least one functional group which is a silicon-bonded hydrolysable group or oxirane group.

Other approaches have been suggested which require the use of some additional alkenyl or Si-H functional materials. US patent 4,726,964 describes a method of imparting releasability to a substrate surface, comprising the steps of coating the substrate surface with an organopolysiloxane composition which comprises an organopolysiloxane which has at least two silicon-bonded aliphatically unsaturated hydrocarbon groups, an organohydrogenpolysiloxane of the formula $(ZSiO_{1.5})_m,(Z_2HSiO_{0.5})_n$ wherein Z is a hydrocarbon free from aliphatic unsaturation, $\underline{m}$ and $\underline{n}$ are positive integers, with the proviso that $0.2<\underline{n/m}<1.5$ and a catalytic amount of a platinum compound. It is mentioned in the specification that in order to increase the adhesive bond strength to the substrate, it is necessary to replace part of the organohydrogen polysiloxane with another organohydrogen polysiloxane of the formula $Z^1\text{-}SiZ_2\text{-}O\text{-}(SiHZ\text{-}O)_p(SiZ_2\text{-}O)_qSiZ_2Z^1$ wherein Z is as above, $Z^1$ is Z or H, $\underline{p}$ is from 1 to 1000 and $\underline{q}$ is from 0 to 1000.

In patent specification EP 559,575 there is described an organopolysiloxane composition which provides a release coating having improved anchorage to substrates, and which comprises an organopolysiloxane having at least two ethylenically unsaturated hydrocarbon groups bonded to silicon, an organohydrogenpolysiloxane crosslinking agent, an effective amount of a hydrosilation catalyst and from 1 to 75% by weight of a silicone component containing a plurality of ethylenically unsaturated groups, said groups having 4 to 12 carbon atoms, wherein in said silicone component T-units comprise from 25 to 90 mole % of the total amount of siloxane units of said silicone component, wherein T-units have the empirical formula $Z^2SiO_{3/2}$, wherein $Z^2$ is a substituted or unsubstituted hydrocarbon group.

There is however a continuing need to provide improved siloxane based compositions, curable via addition reactions, which exhibit good adhesion to a variety of substrates. Many of the above solutions are not satisfactory on some more difficult substrates, e.g. some grades of clay coated papers, different grades of glassine papers and plastic films, especially where a fast cure is also required to crosslink the siloxane composition after applying the coating onto the substrate.

We have now found that if certain crosslinking siloxane polymers are used in combination with alkenyl-functional siloxane materials, compositions are obtained which, when cured, show improvements in adhesion to a variety of substrates.

According to the invention there is provided a curable organosilicon composition comprising (1) an alkenyl functional organopolysiloxane having at least two silicon-bonded groups having the general formula: $R^1{}_aCH=CH_2$ wherein $R^1$ denotes a divalent group consisting of carbon, hydrogen and optionally oxygen atoms and $\underline{a}$ has a value of 0 or 1, (2) a precious metal based hydrosilation catalyst and (3) a hydrosiloxane crosslinker having at least three silicon-bonded hydrogen atoms per molecule, characterised in that the crosslinker has a maximum viscosity at 25°C of 1000mm$^2$/s and has siloxane units of the general formula (a) $R_aSiO_{(4-a)/2}$ (b) $R_3SiO_{1/2}$ and (c) $R_2SiO_{2/2}$ wherein each R independently denotes a substituted or unsubstituted hydrocarbon group free from aliphatic unsaturation and having up to 12 carbon atoms or a hydrogen atom and $\underline{a}$ has a value of 0 or 1, that the crosslinker has at least one siloxane unit (a) per molecule, that at most 40% of all siloxane units in the crosslinker have the formula (b), that at least 40% of all siloxane units in the crosslinker have the formula (c), that at least 50% of all siloxane units of the crosslinker have a silicon-bonded hydrogen, and that of the total number of siloxane units present in the total amount of hydrosiloxane crosslinkers in the composition at least 0.75% are siloxane units of formula (a).

Components (1) and (2) of the compositions according to the present invention are well known and have been described in a number of publications.

Component (1) is an organopolysiloxane having at least two silicon-bonded alkenyl-functional groups per molecule. The alkenyl group may be a cycloalkenyl or a linear alkenyl group, preferably having up to 6 carbon atoms, as exemplified by hexenyl, cyclohexenyl, vinyl, allyl and pentenyl. More preferred are cyclohexenyl, hexenyl, vinyl, or allyl

groups, most preferably vinyl or hexenyl. Preferred organopolysiloxanes (1) have the general formula

$$Y°X_2SiO(X_2SiO)_x(XYSiO)_ySiX_2Y°$$

wherein each X denotes independently a phenyl group or a saturated monovalent group having from 1 to 10 carbon atoms preferably a saturated hydrocarbon group such as an alkyl or cycloalkyl group, for example, methyl, ethyl, propyl, butyl, and cyclohexyl. At least 90% of all the X substituents of the organopolysiloxane are preferably methyl groups, most preferably all being methyl groups. Y denotes an alkenyl group having up to 6 carbon atoms as identified above, and Y° denotes X or Y. It is preferred that each alkenyl group Y in component (1) is a vinyl or hexenyl group. It is preferred that no more than 1% of all units of the organopolysiloxane are units with an alkenyl group, as otherwise there is the possibility of crosslinking the release coating composition too much upon curing. It is possible but not preferred that small amounts (preferably less than 2% of all the substituents present) of other substituents are present, for example hydroxyl groups. Even though the organopolysiloxanes suitable as component (1) in the compositions of the invention are substantially linear polymers, it is allowable that a small number of units (no more than 5% of the total number of units) cause branching of the polymer. Such units would be tetra-functional ($SiO_2$) or trifunctional units ($Y°SiO_{3/2}$). Preferably no more than 1% of such units are present.

In the preferred organopolysiloxane (1), the symbols x and y are 0 or an integer, provided the average value of the sum total of x and y above are such that the siloxane polymer of organopolysiloxane (1) has a viscosity at 25°C of at least 10 $mm^2/s$. Preferably y is 0, resulting in the need for each Y° to denote a group Y and preferably the viscosity at 25°C is in the range from 50 to 5000$mm^2/s$, most preferably 200 to 500$mm^2/s$. Such organopolysiloxanes are well known in the art as are methods for their preparation.

Component (2) is a catalyst which is suitable for promoting the addition reaction of alkenyl groups with silicon-bonded hydrogen atoms, also called hydrosilation reaction. Suitable hydrosilation catalysts are accordingly those based on precious metals, particularly Group VIII metals, including ruthenium, rhodium, palladium, osmium, iridium and platinum. Preferably the hydrosilation catalyst is a platinum compound or complex. Suitable platinum compounds and complexes include chloroplatinic acid, platinum acetylacetonate, complexes of platinous halides with unsaturated compounds such as ethylene, propylene, organovinylsiloxanes, and styrene, hexamethyldiplatinum, $PtCl_2$, $PtCl_3$, $PtCl_4$, and $Pt(CN)_3$. The preferred platinum catalyst is a form of chloroplatinic acid, either as the commonly available hexahydrate form or in its anhydrous form, as taught in US patent 2,823,218. Another particularly useful hydrosilation catalyst is the composition that is obtained when chloroplatinic acid is reacted with an aliphatically unsaturated organosilicon compound such as divinyltetramethyl-disiloxane, as disclosed in US patent 3,419,593. It is preferred that catalyst (2) is employed in an amount giving from 2 to 500 ppm by weight of platinum metal based on the total weight of the organosilicon composition according to the invention, more preferably from 5 to 150 ppm.

Component (3) is a hydrosiloxane crosslinker having siloxane units of the formulae (a), (b) and (c), as defined above, having at least three silicon-bonded hydrogen atoms per molecule and having a viscosity of no more than 1000$mm^2/s$ at 25°C. Each of the groups R in siloxane units (a), (b) and (c) may be the same or different and is independently selected from substituted or unsubstituted hydrocarbon groups being free from aliphatic unsaturation and having up to 12 carbon atoms and hydrogen. Preferably where R is a hydrocarbon group, it is an alkyl or aryl group, but other groups such as alkaryl or aralkyl are possible. It is particularly preferred that each R is a lower alkyl group having 1 to 6 carbon atoms or a phenyl group, more preferably a methyl group. Although it is preferred that the hydrosiloxane crosslinker consist exclusively of units (a), (b) and (c), it is possible that small amounts of other units could be present, but these should not be more than 5% of the total number of units per molecule, preferably not more than 3%. Such additional units may be e.g. $R_bSi(OH)O_{(3-b)/2}$, where R is as defined above and b has a value of 0, 1 or 2, which units could be beneficial in certain circumstances, e.g. where adhesion to a polar surface is particularly desirable. Preferably, however, such units are not present in amounts exceeding 50% of the number of units (a) present in the molecule of component (3). It is a requirement that at least 50% of silicon atoms in the hydrosiloxane crosslinker have substituted thereon a silicon-bonded hydrogen atom. Preferably no more than one hydrogen atom is substituted directly onto a silicon atom. It is also important that there is at least one of each (a), (b) and (c) units present in the molecule, with at least 40%, preferably at least 50%, most preferably 70% or more of all siloxane units having the formula (c). No more than 40% of all siloxane units should have the formula (b). Units of formula (a) will preferably make up at least 1.5% of all units present in the molecule, more preferably from 1.6 to 15%, most preferably 1.8 to 4%. It is preferred that the hydrosiloxane crosslinker has a viscosity of from 5 to 200$mm^2/s$ at 25°C, more preferably 10 to 100$mm^2/s$, most preferably 10 to 30 $mm^2/s$. Particularly useful hydrosiloxane crosslinkers have the general apparent formula

$$R^2{}_3SiO_{1/2}\text{-}(R^2{}_2SiO_{2/2})_c\text{-}(R^2HSiO_{2/2})_d\text{-}(R^2SiO_{3/2})_e\text{-}O_{1/2}SiR^2{}_3$$

wherein $R^2$ is as defined above for R, excluding hydrogen, c has a value of from 0 to 30, d has a value of from 10 to 100 and e has a value of from 0.2 to 3. The fact that this is an apparent formula means that it does not reflect the real structure of the molecule or even the molecular weight (MW) thereof, as a molecule would e.g. not have fractions of $R^2SiO_{3/2}$ units present. The apparent formula is obtained from NMR studies and relative ratios of the different siloxane units present and has been achieved by forcing the analytical data into an equivalent linear molecule, i.e. one in which the relative ratios of units is reduced to a structure allowing only for the presence of 2 $R^2_3SiO_{1/2}$ units. Actual molecules could therefore be many times larger than the apparent formula indicates, as the real structure will allow for more than two $R^2_3SiO_{1/2}$ units in view of the presence of some branching in the molecule. Examples of types of hydrosiloxane crosslinkers include so called rake-type polymers where some units (a) are present in a single siloxane chain consisting mainly of units (c), end-blocked by units (b), wherein each unit (a) has attached thereto a sub-chain consisting mainly of units (c), end-blocked by a unit (b). Another type includes a unit (a) which has three or four chains attached thereto, each chain consisting mainly of units (c) end-blocked by a unit (b).

Hydrosiloxane crosslinkers which are useful in the compositions according to the present invention can be prepared by well-known processes for making hydrosiloxane materials. Suitable processes include the hydrolysis of silanes, e. g. chlorosilanes, at least some of which having silicon-bonded hydrogen atoms, followed by the equilibration of the resulting hydrolysate under acid catalysis. Another known method of preparing suitable hydrosiloxane crosslinkers is the copolymerisation and equilibration under acid catalysis of a mixture of cyclic and linear siloxanes, some of which having silicon-bonded hydrogen atoms. Yet another method of preparing said crosslinkers comprises the equilibration of a short chain siloxane (e.g. one having one unit (a) with three or four units (c) attached thereto) with cyclic siloxanes in the presence of an acid catalyst active in such equilibration reactions.

In addition to the hydrosiloxane crosslinkers of the type shown above, it is possible to include in the compositions according to the invention other well-known standard hydrosiloxane crosslinkers. These have at least three silicon-bonded hydrogen atoms per molecule, preferably linked to three separate silicon atoms and are preferably substantially linear or cyclic organosiloxane compounds. These preferred compounds have the general formula

$$RR^3_2SiO\,(R^3_2SiO)_f\,(R^3HSiO)_h\,SiR^3_2R$$

or

$$\left[\,(R^3_2SiO)_p - (R^3HSiO)_q\,\right]$$

wherein $R^3$ denotes a substituted or unsubstituted alkyl or aryl group having up to 10 carbon atoms, R is as defined above, f has a value of from 0 to 20, h has a value of from 1 to 70, p has a value of from 0 to 20, q has a value of from 1 to 20 and p+q has a value of at least 3, there being at least 3 silicon-bonded hydrogen atoms present per molecule. It is not important if the silicon-bonded hydrogen atoms are on terminal silicon atoms or not. It is preferred that $R^3$ denotes a lower alkyl group having no more than 3 carbon atoms, most preferably a methyl group. R preferably denotes an $R^2$ group. Preferably f = 0 and h has a value of from 6 to 40 and more preferably 8 to 20, or where cyclic organosilicon materials are used, p is preferably 0 and q is from 3 to 8. It is preferred that the viscosity is kept low, e.g. less than 100mm²/s, preferably less than 50mm²/s. The amount of standard hydrosiloxane crosslinker used in compositions according to the invention may range from 0 to 75% by weight of the total amount of hydrosiloxane crosslinker used, but is preferably not used in amounts which exceed 50% by weight.

The amount of hydrosiloxane crosslinker, whether only the specifically identified crosslinker (3) for use in the compositions according to the invention is used, or whether the combination thereof with one or more standard hydrosiloxane crosslinkers, as defined above, is used, which is employed in a composition according to the invention is preferably sufficient to provide a ratio of the number of silicon-bonded hydrogen atoms over the number of alkenyl groups in the composition of from about 1/1 to about 2.5/1. Possibly stoichiometric amounts are used, i.e. the ratio being close to 1/1. It is however, more preferred to have some stoichiometric excess of SiH groups present to ensure complete crosslinking of the composition. Preferred SiH/alkenyl number ratios are from 1.1/1 to 1.8/1, more preferably 1.1/1 to 1.4/1. It is important that of the total number of siloxane units present in the total amount of hydrosiloxane crosslinkers used in organosilicon compositions according to the invention, whether crosslinkers identified as essential ingredients (Component (3)) of such compositions or standard hydrosiloxane crosslinkers, at least 0.75% are siloxane units of formula (a). More preferably at least 1.5% of such siloxane units are present, most preferably 1.8 to 4% based on the total number of siloxane units in the crosslinkers.

Optionally a curable organosilicon composition according to the invention comprises additional ingredients, e.g.

bath life extenders, inhibitors, colorants, dyes, fillers, e.g. silica, quartz, $CaCO_3$, adhesion promoters, release modifiers, solvents, diluents, fragrances and preservatives.

Bath life extenders may be present in a total amount sufficient to further retard the curing reaction at room temperature such as those described in US patent 5,036,117 to which the reader is referred. Examples of suitable bath life extender compounds include compounds which contain one or more primary or secondary alcohol groups, carboxylic acids (including compounds which yield carboxylic acids when exposed to water) and cyclic ethers. Primary and secondary alcohols, preferably having fewer than 10 carbon atoms are the most preferred for the compositions of this invention. Examples thereof include methanol, ethanol, n-propanol, i-propanol, 1-butanol, 2-butanol, i-butanol, and normal-, secondary-, and iso- pentanols, hexanols, heptanols and octanols, tetradecanol and other alkanols; benzyl alcohol, phenol, and other aromatic alcohols such as methylphenyl carbinol, and 2-phenylethyl alcohol; allyl alcohol, and cyclohexanol.

It is highly preferred that the bath life extender is benzyl alcohol or methylvinyl cyclosiloxanes. The amount of bath life extender that is to be used can be as high as 10% by weight, more preferably, 0.1 to 5% by weight, and most preferably 1 to 3% by weight, based on the weight of Components (1) and (3) combined.

Curable organosilicon compositions according to the invention may also comprise inhibitors, used to inhibit the catalytic activity of the catalysts. Examples of suitable inhibitors include ethylenically or aromatically unsaturated amides, acetylenic compounds, ethylenically unsaturated isocyanates, olefinic siloxanes, unsaturated hydrocarbon diesters, conjugated ene-ynes, hydroperoxides, nitriles, and diaziridines. Suitable and more preferred inhibitors include acetylenic alcohols, e.g. those disclosed in US patents 3,445,420, 4,562,096, 4,774,111, 4,465,818, 4,472,563, 4,559,396, including ethynylcyclohexanol, methylbutynol, unsaturated carboxylic esters, conjugated ene-ynes, cyclic siloxanes having the general formula $[(D)_2SiO]_W$ wherein D denotes a group selected from lower alkyl groups, preferably $C_{1-4}$ alkyl groups and lower alkenyl groups, preferably vinyl or allyl groups, and $\underline{w}$ has a value of from 3 to 8.

Other optional ingredients include, as release modifiers, certain silicone resins comprising only monovalent and tetravalent siloxane groups, also known as MQ resins. Suitable resins have been described in the art, e.g. in US patents 3,527,659, 4,322,518, 4,609,574, 4,652,096, 4,774,111, 4,961,963, 5,036,117, 5,125,998, and 5,273,946 and EP patent specifications 108,208, 523,660, and include MQ resins, vinyl-functional MQ resins. Other types of release modifiers have been disclosed in EP 652,257, which mentions a MQ resin in conjunction with an $\alpha,\omega$-diolefin and in our co-pending application EP 0,780,454, which mentions the use of a fluorosilicone compound.

Curable organosilicon compositions according to the invention may be prepared by merely mixing the ingredients. It is however preferred for storage stability reasons that the catalyst (2) and the hydrosiloxane crosslinker (3) are kept away from each other till shortly before the application of the composition to a substrate. This is particularly important if no inhibitors or only a limited amount of inhibitors is used.

Curable organosilicon compositions according to the invention may be applied to a variety of substrates by several application methods. Suitable application methods include spraying, doctor blade, screen printing, dipping, transfer coating and other known methods. The best method for a particular substrate will of course depend on the type of substrate, the required thickness of the silicone material to be applied, the curing conditions which can be applied.

The organosilicon compositions according to the invention may be used for a number of applications. They may be used to coat a wide variety of substrates with silicone materials. Potential substrates include glass, textile, paper, polyurethane, plastic, e.g. polyester, polyvinyl chloride and metal. Applications include all applications where organosilicon compositions are applicable, including release liners, protective coatings, encapsulating coatings, abrasion resistant coatings and adhesive coatings.

The present invention also includes in another of its aspects a process of coating a substrate with an organosilicon composition, which comprises applying to the substrate a curable organosilicon composition as described above, and allowing the composition to cure.

There now follow a number of examples which illustrate the invention. All parts and percentages are given by weight unless otherwise mentioned.

Examples 1-10

Preparation of hydrosiloxane crosslinkers

In a 500ml three-necked flask, equipped with a stirrer, thermometer, condenser and nitrogen blanket, were charged x g of hexamethyldisiloxane, $\underline{y}$ g of octamethylcyclotetrasiloxane, $\underline{z}$ g of tetramethylcyclotetrasiloxane, $\underline{v}$ g of methyltrimethoxysilane and $\underline{w}$ g of water. The mixture was made homogeneous and heated to 90°C, where it was kept under agitation for 30 minutes, at which time a catalyst (Amberlyst®-15) was added and the reaction was allowed to take place over a 8 hour period. After the completion of the reaction, the mixture was allowed to cool, and 1 g of calcium carbonate was added to neutralise the acid catalyst and stirred for an additional 4 hours. The resulting mixture was filtered, stripped at reduced pressure (50 mbar) and increased temperature (140°C) to provide a clear colourless liquid,

which was analysed by $^{29}Si$ NMR, Size exclusion Chromatography (SEC) and kinematic viscosity measurement. The resulting polymer has the apparent structure given in Table I, wherein M denotes a siloxane unit $(CH_3)_3SiO_{1/2}$, D denotes a siloxane unit $(CH_3)_2SiO_{2/2}$, $D^H$ denotes a siloxane unit $(CH_3)HSiO_{2/2}$ and T denotes a siloxane unit $(CH_3)SiO_{3/2}$. In Examples 3, 6, 7, 9 and 10, the Amberlyst catalyst was replaced by trifluorosulphonic acid, and in Example 8, the reaction took place at 65°C over a period of 12 hours, while in Example 3 the reaction took place at 60°C over a period of 12 hours and in Example 5 the reaction took place at 60°C over a period of 10 hours. Details of x, y, z, v, w, apparent structure and viscosity η (in mm²/s at 25°C) are given in Table I.

TABLE I

| Example | x | y | z | v | w | apparent structure | η |
|---|---|---|---|---|---|---|---|
| 1 | 3.2 | 15.2 | 38.6 | 3.2 | 0 | $M\text{-}D_{12}D^H_{33}\text{-}T_{1.0}\text{-}M$ | 15 |
| 2 | 3.2 | 21.0 | 54.4 | 3.2 | 0 | $M\text{-}D_{16.4}\text{-}D^H_{43}\text{-}T_{1.2}\text{-}M$ | 19 |
| 3 | 2.8 | 26.8 | 65.1 | 1.9 | 0.3 | $M\text{-}D_{22}\text{-}D^H_{62}\text{-}T_{1.3}\text{-}M$ | 64 |
| 4 | 3.2 | 18.5 | 45.0 | 3.6 | 0 | $M\text{-}D_{12}\text{-}D^H_{38}\text{-}T_{1.3}\text{-}M$ | 10 |
| 5 | 2.9 | 26.8 | 65.1 | 4.7 | 0.7 | $M\text{-}D_{16}\text{-}D^H_{61}\text{-}T_{1.1}\text{-}M$ | 51 |
| 6 | 29 | 67.1 | 171 | 33 | 0.1 | $M\text{-}D_{9}\text{-}D^H_{18}\text{-}T_{1.2}\text{-}M$ | 7 |
| 7 | 14 | 80.1 | 197 | 8.9 | 0.1 | $M\text{-}D_{14}\text{-}D^H_{38}\text{-}T_{1}\text{-}M$ | 18 |
| 8 | 2.8 | 26.8 | 65.1 | 1.9 | 0.3 | $M\text{-}D_{22}\text{-}D^H_{58}\text{-}T_{1.5}\text{-}M$ | 133 |
| 9 | 4.2 | 0.0 | 92.3 | 3.5 | 0.0 | $M\text{-}D^H_{60}\text{-}T_{1}\text{-}M$ | 42 |
| 10 | 30 | 0.0 | 240 | 30 | 0.1 | $M\text{-}D^H_{22}\text{-}T_{1.2}\text{-}M$ | 8 |

## Examples 11-13

In a 250 ml three-necked flask, equipped with stirrer, thermometer, condenser and nitrogen blanket, were charged 6.77 g of tris(dimethylhydrosiloxy)n-octylsilane, 6.87 g of decamethylcyclopentasiloxane and 35.5 g of pentamethylcyclopentasiloxane. This mixture was agitated while 0.05ml of trifluorosulphonic acid catalyst was added upon which the mixture was heated to 80°C, and kept at that temperature for 4 hours with agitation. Calcium carbonate was added to neutralise the catalyst, and after 4 hours the mixture was allowed to cool to room temperature before filtration and subsequent stripping under reduced pressure at 100°C. A clear colourless liquid was obtained with a viscosity at 25°C of 25mm²/s, with an apparent structure of $M^H\text{-}D_7\text{-}D^H_{40}\text{-}T^R_{1.8}\text{-}M^H$ (Ex. 11), wherein D and $D^H$ are as defined above, $M^H$ denotes a unit $(CH_3)_2SIHO_{1/2}$ and T° denotes a group $CH_3(CH_2)_7\text{-}SiO_{3/2}$. Equivalent synthetic routes were carried out to obtain materials of the apparent structure $M^H\text{-}D_{12}\text{-}D^H_{34}\text{-}T^R_{1.5}\text{-}M^H$ (Ex. 12), with a viscosity at 25°C of 25 mm²/s and $M^H\text{-}D_{5.5}\text{-}D^H_{26.9}\text{-}T^R_{1.8}\text{-}M^H$ (Ex. 13), with a viscosity at 25°C of 20 mm²/s.

## Examples 14-22

The hydrosiloxane crosslinkers of Examples 1 to 10 were formulated into curable organosiloxane compositions by mixing r parts of a hydrosiloxane crosslinker of one of Examples 1 to 10 with s parts of a mixture, having a viscosity at 25°C of about 360mm²/s consisting of 0.81 parts of bis(methoxymethylethyl)maleate as cure inhibitor, 97.29 parts of a dimethylsiloxane, methylhexenylsiloxane copolymer having dimethylhexenyl siloxane end-blocking units and having about 0.95% by weight of groups $\text{-}CH{=}CH_2$ per molecule and 1.9 parts of a platinum catalyst composition, comprising about 0.52% platinum, based on a complex with a vinylmethyl siloxane and giving 120 ppm of platinum metal. The ratio of r/s was such that the ratio of the number of silicon-bonded hydrogen atoms in the crosslinkers over the number of alkenyl groups in the dimethylsiloxane, methylhexenylsiloxane copolymer was 1.15/1. Examples 14 to 22 respectively used hydrosiloxane crosslinkers 1, 2, 3, 4, 5, 6, 8, 9 and 10.

## Comparative Examples C1-C2

Compositions similar to Examples 14 to 22 were prepared, using instead of hydrosiloxane crosslinkers of Examples 1 to 10, crosslinkers C1 or C2. C1 is a dimethylsiloxane methylhydrogensiloxane copolymer having trimethylsiloxane end-groups, having a viscosity at 25°C of 30mm²/s and 10500ppm of SiH. C2 is a methylhydrogensiloxane polymer having trimethylsiloxane end-groups, having a viscosity at 25°C of 30mm²/s and 16500ppm of SiH. Although the products C1 and C2 are regarded as linear polymers, it has been found that they actually contain a number of $CH_3SiO_{3/2}$

units, which are present in an amount of 0.25% of the total number of siloxane units in the case of C1, and an amount of 0.5% for C2.

Performance of release coatings for Examples 14-22

Release coatings were applied to paper based on compositions of Examples 14 to 22 and of comparative Examples C1 and C2. They were coated on a variety of paper substrates, some known to give bad adhesion when conventional curable organosilicon compositions are applied thereto. They were applied by blade coater at room temperature (20°C) to give a coat weight of from 1.1 to 1.3g/m$^2$, and cured in a air circulation oven at 120°C for sufficient time ($t_{NNN}$) to give NNN, i.e. no migration, no smear and no rub-off. Migration is measured by placing a strip of adhesive (Sellotape®) on the cured release coating, and after removal checking if any of the coating has been transferred to the adhesive tape. No migration means no transfer has taken place. Smear is measured by pushing one's finger over the cured coating and checking if there is any visible mark left in the form of a smear. Rub-off is measured by rubbing one's finger hard over the paper back and forth for 10 rubs and checking if any of the coating has been damaged or removed. This latter test is a well known and widely used test in the paper coating industry and is used in the present examples to establish the adhesion of the coating onto the paper. The shorter the $t_{NNN}$, the better the cure ability of the composition is.

Once the $t_{NNN}$ was established, a number of A4 size sheets of the same paper were coated at the relevant conditions. Three sheets were placed in a dark place at 23°C and 50% RH (relative humidity). Adhesion was tested each day for the first two weeks, and then weekly for a period up to 6 weeks, until adhesion had failed by the rub-off test. Three more sheets were placed under a neon tube light at 23°C and 50% RH, and were tested for adhesion as indicated above. A seventh sheet was passed under two 300W UV fusion lamps at the speed of 10m/min. After each pass, adhesion was tested and the sheet was allowed to cool to room temperature before the next pass. When the rub-off test shows failure of adhesion, the test was stopped. The number of passes before failure was recorded as a measure of adhesion. The types of paper used were different grades of clay coated papers, P1 being 6 years old, the others being identified as P2, P3 and P4. An additional application took place on a polyester film (PE), but limited testing was done on the latter. Details of paper type, $t_{NNN}$ in seconds, ageing in darkness ($A_d$) in days when adhesion failed after coating when stored in darkness, ageing in light ($A_l$) in days when adhesion failed after coating when stored under neon light, and ageing under UV ($A_{UV}$) in number of passes under the UV lamps before adhesion failed, are given in Table II.

TABLE II

| Example | paper | $t_{NNN}$ | $A_d$ | $A_l$ | $A_{UV}$ |
|---|---|---|---|---|---|
| 14 | P4 | 30 | >28 | >28 | 9 |
| 15 | P4 | 30 | >28 | >28 | 11 |
| 16 | P1 | 60 | >21 | 21 | 8 |
| 17 | P4 | 40 | 28 | 28 | 7 |
| 18 | P1 | 60 | >42 | >42 | 10 |
| 19 | P2 | 20 | >42 | >42 | 12 |
| 19 | P3 | 50 | >28 | >28 | 10 |
| 20 | P1 | 55 | >42 | >42 | 9 |
| 21 | P2 | 40 | >28 | >28 | 19 |
| 22 | P2 | 40 | >28 | >28 | 20 |
| 22 | P1 | 45 | >42 | 42 | 45 |
| 14 | PE | - | >1 | NOT DONE | NOT DONE |
| C1 | P1 | >300 | 7 | 1 | 1 |
| C1 | P2 | 35 | 14 | 7 | 4 |
| C1 | P3 | 50 | >28 | 28 | 7 |
| C1 | P4 | 30 | 5 | 5 | 4 |
| C2 | P1 | 30 | >28 | 28 | 3 |

TABLE II (continued)

| Example | paper | $t_{NNN}$ | $A_d$ | $A_I$ | $A_{UV}$ |
|---|---|---|---|---|---|
| C2 | P2 | 40 | >28 | 28 | 12 |
| C1 | PE | - | 0 | NOT DONE | NOT DONE |

The examples show how the use of hydrosiloxane crosslinkers improves the adhesion of curable siloxane compositions to different substrates, while maintaining a relatively short curing time.

Performance of release coatings for Examples 11-13

Hydrosiloxane crosslinkers of Examples 11 to 13 were formulated into curable organosiloxane compositions of Examples 23, 24 and 25 resp. by mixing sufficient parts of the hydrosiloxane crosslinker with 1.9 parts of a platinum complex to give 100ppm of platinum metal in the composition, and with a mixture of components as given below, to ensure that the ratio of the number of silicon-bonded hydrogen atoms in the composition over the number of alkenyl groups in the composition was about 1.4/1. The mixture referred to above consisted of 1.8 parts of trimethyl (3,5-dimethyl-1-hexyn-3-oxy)silane, 90 parts of a dimethylsiloxane methylhexenylsiloxane copolymer having an apparent structure of $M^{Hex}$-$D_{98}$-$D^{Hex}{}_2$-$M^{Hex}$, where D is as defined above, $M^{HeX}$ denotes a unit $(CH_2{=}CH)\ (CH_2)_4\text{-}Si(CH_3)_2O_{1/2}$ and $D^{Hex}$ denotes a group $(CH_2{=}CH)(CH_2)_4\text{-}Si(CH_3)O_{2/2}$.

The organosiloxane release compositions of Examples 23 to 25, thus obtained and comparative composition C1 were applied to Nicolet® No. 54.5 SCK paper at room temperature to give a coat weight of 1.1 g/m$^2$. After curing the coating at 93°C for 6 seconds in an air circulation oven, the anchorage was measured after 1 day by rubbing the coating 10 times hard with one's finger and checking if any mark is made. This was repeated after 3 days and 7 days. In Table III, the results are given, where 0 indicates no rub-off of marking, 1= dulling of the coating upon rubbing, 2= slight rub-off, 3 some rub-off and 4 gross rub-off.

TABLE III :

| anchorage results | | | |
|---|---|---|---|
| Example | after 1 day | after 3 days | after 7 days |
| 23 | 0 | 1 | 1 |
| 24 | 2 | 2 | 1 |
| 25 | 0 | 0 | 1 |
| C1 | 4 | 4 | 4 |

The results show an improvement in anchorage when compositions according tot he invention are used. The extent of cure of these materials was also checked by immersing the coated substrates in methyl isobutylene ketone, and measuring the amount of silicon which was extracted using Atomic Absorption. This was also found to be better for the compositions according to the invention than for the comparative example.

## Claims

**1.** A curable organosilicon composition comprising

(1) an alkenyl functional organopolysiloxane having at least two silicon-bonded groups having the general formula $-R^1{}_aCH{=}CH_2$ wherein $R^1$ denotes a divalent group consisting of carbon, hydrogen and optionally oxygen atoms and a has a value of 0 or 1,
(2) a precious metal based hydrosilation catalyst and
(3) a hydrosiloxane crosslinker having at least three silicon-bonded hydrogen atoms per molecule,

characterised in that the hydrosiloxane crosslinker has a maximum viscosity at 25°C of 1000mm$^2$/s, has siloxane units of the general formula (a) $R_aSiO_{(4-a)/2}$ (b) $R_3SiO_{1/2}$ and (c) $R_2SiO_{2/2}$ wherein each R independently denotes a substituted or unsubstituted hydrocarbon group free from aliphatic unsaturation and having up to 12 carbon atoms or a hydrogen atom and a is as described above, has at least one siloxane unit (a) per molecule, has at

most 40% of all siloxane units in the crosslinker with the formula (b), has at least 40% of all siloxane units in the crosslinker with the formula (c), has at least 50% of all siloxane units of the crosslinker with a silicon-bonded hydrogen, and in that of the total number of siloxane units present in the total amount of hydrosiloxane crosslinkers in the composition at least 0.75% are siloxane units of formula (a).

**2.** A curable organosilicon composition according to Claim 1, characterised in that the alkenyl group of organopolysiloxane (1) is selected from cyclohexenyl, hexenyl, vinyl, and allyl groups.

**3.** A curable organosilicon composition according to Claim 1 or 2, wherein organopolysiloxane (1) is characterised by the general formula

$$Y^{o}X_2SiO(X_2SiO)_x(XYSiO)_ySiX_2Y^{o}$$

wherein each X denotes independently a phenyl group or a saturated monovalent group having from 1 to 10 carbon atoms, Y denotes an alkenyl group having up to 6 carbon atoms and $Y^o$ denotes X or Y, x and y are independently 0 or an integer, provided that the average value of the sum total of x and y is such that the organopolysiloxane has a viscosity at 25°C of at least $10mm^2/s$.

**4.** A curable organosilicon composition according to anyone of the preceding claims, characterised in that the hydrosilation catalyst (2) is a platinum compound or complex.

**5.** A curable organosilicon composition according to anyone of the preceding claims, characterised in that each of the groups R in siloxane units (a), (b) and (c) of the hydrosiloxane crosslinker (3) is independently selected from substituted or unsubstituted alkyl groups, aryl groups and hydrogen.

**6.** A curable organosilicon composition according to anyone of the preceding claims, characterised in that in hydrosiloxane crosslinker (3) 70% or more of all siloxane units having the formula (c).

**7.** A curable organosilicon composition according to anyone of the preceding claims, characterised in that in hydrosiloxane crosslinker (3) units of formula (a) make up at least 1.5% of all units present in the molecule.

**8.** A curable organosilicon composition according to anyone of the preceding claims, characterised in that in hydrosiloxane crosslinker (3) units of formula (a) make up from 1.8% to 4% of all units present in the molecule.

**9.** A curable organosilicon composition according to anyone of the preceding claims, characterised in that the hydrosiloxane crosslinker has the general apparent formula, as defined herein,

$$R^2{}_3SiO_{1/2}\text{-}(R^2{}_2SiO_{2/2})_c\text{-}(R^2HSiO_{2/2})_d\text{-}(R^2SiO_{3/2})_e\text{-}O_{1/2}SiR^2{}_3$$

wherein $R^2$ is as defined above for R, excluding hydrogen, c has a value of from 0 to 30, d has a value of from 10 to 100 and e has a value of from 0.2 to 3.

**10.** A curable organosilicon composition according to anyone of the preceding claims, characterised by the additional presence of a standard hydrosiloxane crosslinker, having at least three silicon-bonded hydrogen atoms per molecule, which is a substantially linear or cyclic organosiloxane compound, having the general formula

$$RR^3{}_2SiO\,(R^3{}_2SiO)_f\,(R^3HSiO)_hSiR^3{}_2R$$

or

$$\left[(R^3{}_2SiO)_p - (R^3HSiO)_q\right]$$

wherein $R^3$ denotes an alkyl or aryl group having up to 10 carbon atoms, R is as defined above, f has a value of from 0 to 20, h has a value of from 1 to 70, p has a value of from 0 to 20, q has a value of from 1 to 20 and p+q has a value of at least 3.

**11.** A curable organosilicon composition according to anyone of the preceding claims, characterised in that the ratio of the number of silicon-bonded hydrogen atoms over the number of alkenyl groups is of from about 1/1 to about 2.5/1.

**12.** A process of coating a substrate, selected from glass, textile, paper, polyurethane, plastic, polyester, polyvinyl chloride and metal. with an organosilicon composition, which comprises applying to the substrate a curable organosilicon composition according to anyone of the preceding claims, and allowing the composition to cure.